# EUROPÄISCHE PATENTANMELDUNG

(11) **EP 1 800 763 A1**
(43) Veröffentlichungstag der Anmeldung: **27.06.2007**
(21) Anmeldenummer: 05027845.6
(22) Anmeldetag: 20.12.2005
(51) Int. Cl.: B05D 1/04

(54) **Verfahren zur Beschichtung von Graphitfolie**

(71) Anmelder: SGL Carbon AG, 65203 Wiesbaden (DE)
(72) Erfinder: Fischer, Ludger, Dr., 53343 Wachtberg-Berkum (DE)

(57) **Zusammenfassung**

Das erfindungsgemäße Verfahren ermöglicht das Aufbringen einer dünnen Beschichtung auf eine Flachseite (Vorderseite) und die Kantenflächen eines flächigen Gebildes aus Graphitfolie, indem das Beschichtungsmaterial durch elektrostatisches Pulversprühen gefolgt von einem Sinterzyklus beziehungsweise Aufschmelzryklus auf die zu beschichtende Flachseite (Vorderseite) des flächigen Gebildes aus Graphitfolie aufgetragen wird, das während des Sprühens auf einer begrenzten Fläche mit mindestens 5 mm Abstand von den Rändern nahezu in der Mitte seiner der Sprührichtung abgewandten Rückseite elektrisch kontaktiert wird.

## Beschreibung

Die vorliegende Erfindung betrifft ein Verfahren zum Beschichten von flächigen Gebilden aus Graphitfolie mit einer eine Flachseite und die Kanten bedeckenden Schutz- bzw. Isolierschicht.

Mit Schutz- bzw. Isolierschichten aus einem Thermoplast beschichtete Artikel aus Graphitfolie und Verfahren zum Aufbringen derartiger Schutzschichten sind aus der Patentanmeldung US 2002/0163076A1 bekannt. Dort wird detailliert die Beschichtung der Graphitfolie durch Auflaminieren, Aufwalzen oder Aufkleben von Kunststofffolien beschrieben. Als mögliche Verfahrensalternative wird die Sprühbeschichtung (spray coating) erwähnt, ohne dass zu diesen Verfahren irgendwelche Details offenbart werden.
Kritisch für alle vorgeschlagenen Verfahren ist, dass eine geringe Dicke (maximal 0,025 mm) der aufzutragenden Schicht gewünscht ist, wobei diese Schicht über die gesamte zu beschichtende Oberfläche gleichmäßig dünn sein soll, und dass neben mindestens einer Flachseite des Artikels aus Graphitfolie auch die Kantenflächen, welche aufgrund der Dicke der Graphitfolie Höhen von 0,25 bis 1,5 mm aufweisen, mitbeschichtet werden sollen.
Häufig wird nur auf einer der Flachseiten des Artikels aus Graphitfolie eine Beschichtung benötigt. Für diese Variante wird im folgenden die zu beschichtende Flachseite als Vorderseite bezeichnet, und im Gegensatz dazu die andere, unbeschichtete Flachseite als Rückseite.

Eine Beschichtung im Sprühverfahren kann beispielsweise mit einem als Pulver oder als Schmelze vorliegenden Material erfolgen. Sprüht man die Kantenflächen direkt an, so ergibt sich durch den dabei unvermeidbaren Overspray (überschüssigen Materialauftrag) auf die Vorderseite des Werkstücks neben einem erhöhten Materialverbrauch auch eine unerwünschte Erhöhung der Dicke der Sprühschicht an der Vorderseite des Werkstücks.
Soll der die Kantenbeschichtung einschließende Sprühprozess automatisiert werden, so müsste der Sprühapparat zusätzlich zu den Bewegungsachsen in x- und in y-Richtung, d.h. parallel zur Vorderseite des zu beschichtenden Werkstücks, für die Beschichtung der Kanten eine zusätzliche Bewegungsachse in z-Richtung parallel zur Höhenausdehnung (Dicke) des zu beschichtenden Werkstücks aufweisen.

Die Aufgabe der vorliegenden Erfindung besteht darin, ein Sprühverfahren zur Beschichtung flächiger Gebilde aus Graphitfolie mit einer eine Flachseite und die Kantenflächen bedeckenden Schutz-, Isolier- oder sonstigen Funktionsschicht bereit zu stellen, welches die vorgenannten Nachteile des Standes der Technik überwindet.

Diese Aufgabe wird erfindungsgemäß gelöst, indem das Beschichtungsmaterial durch elektrostatisches Pulversprühen gefolgt von einem Sinterzyklus bzw, einem Aufschmelz-zyklus auf die zu beschichtende Flachseite (Vorderseite) des flächigen Gebildes aus Graphitfolie aufgetragen wird, wobei während des Sprühens das flächige Gebilde aus Graphitfolie auf einer begrenzten Fläche nahezu in der Mitte seiner der Sprührichtung Abgewandten Rückseite elektrisch kontaktiert wird, Begrenzte Fläche bedeutet hier mindestens 5 mm von den Rändern entfernt.
Aufgrund der Schichtebenenstruktur des Graphits ist die elektrische Leitfähigkeit in der Folienebene signifikant höher als senkrecht zur Folienebene. Durch diese Anisotropie der elektrischen Leitfähigkeit der Graphitfolie bildet sich ein Feldlinienveflauf aus, der geeignet ist, eine Mitbeschichtung der Kantenflächen zu bewirken. Daher sind bei der erfindungsgemäßen Verfahrensweise nur zwei Bewegungsachsen (in x- und in y-Richtung) für die Sprühvorrichtung erforderlich.

Die Technik der elektrostatischen Pulverbeschichtung als solche ist in der Fachwelt bekannt.
Sie beruht auf der Tatsache, dass sich Körper mit entgegengesetzter elektrischer Ladung anziehen. Zwischen dem Sprühkopf und dem geerdeten Werkstück bildet sich ein elektrisches Feld. Die Pulverpartikel folgen dessen Feldlinien und bleiben aufgrund der Restladung auf dem Werkstück haften. So setzt sich das Pulver an der Oberfläche des Werkstücks ab und dringt selbst in kleinste mikrofeine Unebenheiten der Oberfläche ein.

In diesem Zustand muss das beschichtete Werkstück für kurze Zeit bei 160 bis 280 °C ca. 15 bis 30 Minuten lang "eingebacken" werden. Temperatur und Dauer dieses sogenannten Backprozesses hängen von der Zusammensetzung der gewählten Beschichtung ab. Während dieses Prozesses kommt es zu einem Zusammensintern aufgesprühten Partikel bzw, zu einem Zusammenschmelzen der aufgesprühten Partikel zu einer hochviskosen Schmelze, so dass eine zusammenhängende, gleichmäßige, in sich geschlossene Oberflächenbeschichtung entsteht.
Danach wird das beschichtete Werkstück erkalten gelassen.

Der gesamte vorstehend beschriebene Prozess umfassend die Erwärmung auf die Schmelz- bzw. Sintertemperatur, die Haltezeit bei dieser Temperatur und die anschließende Abkühlung unter Verfestigung der Beschichtung wird hier als Sinter- bzw. Aufschmelzzyklus bezeichnet.
Üblicherweise dienen so erzeugte Schichten, beispielsweise auf Werkstücken aus Metall, zum Korrosionsschutz oder als Dekorschicht. Die typischen Schichtdicken liegen im Bereich von 0,1 bis 0,2 mm, um die erwähnten Effekte zu erzielen.

Grundsätzlich sind bei der elektrostatischen Pulversprühtechik die gleichen Probleme (Overspray, Notwendigkeit einer weiteren Bewegungsachse für die Kantenbeschichtung etc.) wie bei herkömmlichen Sprühtechniken zu erwarten. Diese Probleme lassen sich jedoch bei der Beschichtung flächiger Gebilde aus Graphitfolie durch die erfindungsgemäße Positionierung und Dimensionierung des elektrischen Kontakts vermeiden.

Die zu beschichtenden flächigen Gebilde aus Graphitfolie können beispielsweise quadratisch oder rechteckig sein, jedoch sind selbstverständlich auch andere geometrische Formen möglich, je nach Einsatzzweck.
Das erfindungsgemäße Verfahren wird beispielsweise benutzt, um flächige Gebilde aus Graphitfolie, die als Wärmeableiter (sog. heat spreader oder thermal interface) in elektronischen Geräten eingesetzt werden, mit einer Schutzschicht zu versehen, welche das Herausbrechen, Abblättern oder Abplatzen von Graphitpartikeln von der Oberfläche bzw. den Kanten der Graphitfolie verhindert ("antiflaking"-Beschichtung) oder/und als elektrische Isolierschicht wirkt.
Für diese Zwecke geeignete Beschichtungsmaterialien sind beispielsweise Thermoplaste wie Polyethylen, Polypropylen und Polyester.
Bevorzugt beträgt die Schichtdicke nur 5 bis 10 µm, um den Wärmedurchgang so wenig wie möglich zu beeinträchtigen. Durch geeignete Auswahl der Düsen des Sprühkopfes und der Bewegungsgeschwindigkeit der Sprühkopfes lassen sich diese für das elektrostatische Sprühverfahren untypisch niedrigen Schichtdicken erzielen.
Während des Aufschmelz- bzw. Sinterzyklusses erfolgt eine Aufheizung auf eine Temperatur zwischen 160 und 280 °C. Diese Temperatur wird ca. 15 bis 30 Minuten lang gehalten.

Die Erfindung wird im folgenden anhand von Figuren und Ausführungsbeispielen näher beschrieben.

Die Figuren zeigen:
- Figur 1:: Feldlinienverlauf bei flächiger Kontaktierung an der Rückseite des zu beschichtenden flächigen Gebildes aus Graphitfolie (Vetgleichsbeispiel 1)
- Figur 1A:: Feldlinienverlauf an der Kante des zu beschichtenden flächigen Gebildes aus Graphitfolie (Ausschnitt IA aus Figur 1)
- Figur 2:: Feldlinienverlauf bei punktförmiger Kontaktierung ungefähr in der Mitte der Rückseite eines flächigen Werkstücks aus Metall (Vergleichsbeispiel 2)
- Figur 2A:: Feldlinienverlauf an der Kante des zu beschichtenden flächigen Werkstücks aus Metall (Ausschnitt IIA aus Figur 2)
- Figur 3:: Feldlinienverlauf bei erfindungsgemäßer punktförmiger Kontaktierung ungefähr in der Mitte der Rückseite des zu beschichtenden flächigen Gebildes aus Graphitfolie (Beispiel 3)
- Figur 3A: Feldlinienverlauf an der Kante des zu beschichtenden flächigen Gebildes aus Graphitfolie (Ausschnitt IIIA aus Figur 3)

### Ausführungsbeispiele:

### Beispiel 1 (Vergleichsbeispiel)

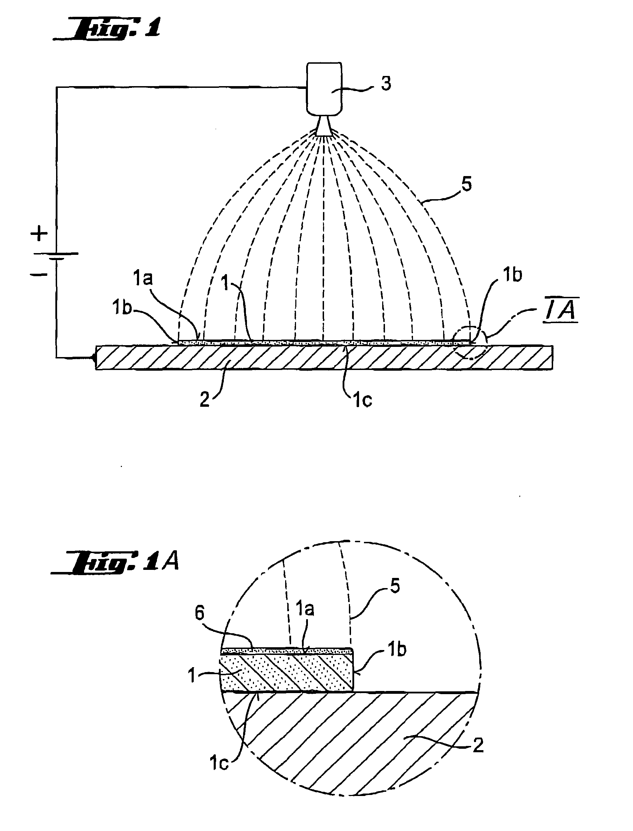

Wie bei der bekannten elektrostatischen Pulverbeschichtungstechnik üblich, wird das zu beschichtende flächige Gebilde aus Graphitfolie 1 auf eine leitend verbundene Unterlage 2 gelegt, oder die Gegenelektrode wird mit einer Krokodilklemme am Rand des flächigen Gebildes 1 aus Graphitfolie angeschlossen.
Als Folge der elektrischen Anisotropie der Graphitfolie bildet sich zwischen Graphitfolie 1 und Sprühkopf 3 ein Feldlinienverlauf 5 gemäß Figur 1. Die Pulverabscheidung erfolgt daher ausschließlich auf der Vorderseite 1a der Graphitfolie, die Kanten 1b werden nicht mitbeschichtet,
Eine Mitbeschichtung der leitende Unterlage 2kann beispielsweise durch eine nichtleitende Abdeckung (in Figur 1 der Übersichtlichkeit halber nicht dargestellt9 vermieden werden.

Die Schichtdicke der aufgebrachten Beschichtung 6 betrug etwa 10 µm.

### Beispiel 2 (Vergleichsbeispiel)

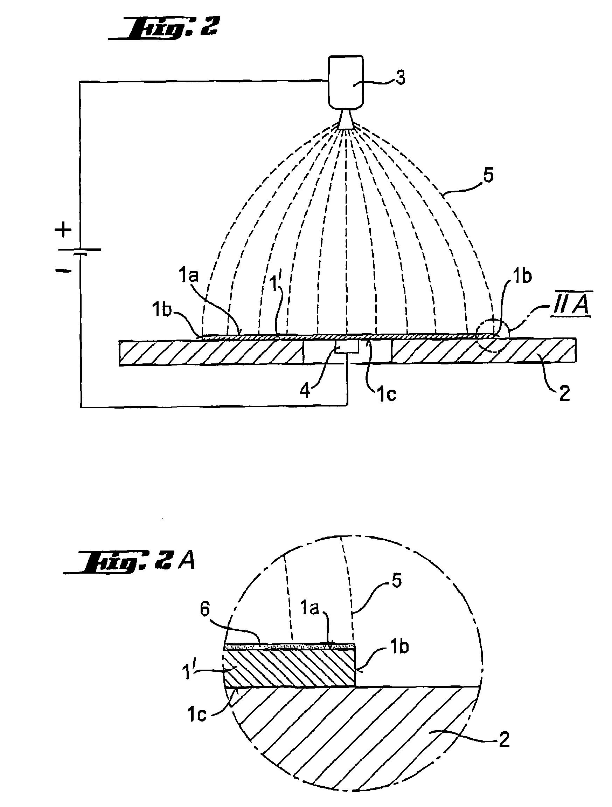

Ein flächiges Werkstück 1' aus Metall wird in der Mitte der nicht zu beschichtenden Rückseite 1 c punktförmig kontaktiert (Kontakt 4). Die Unterlage 2 ist nicht leitfähig.
Da in Metallen die elektrische Leitfähigkeit isotrop (unabhängig von der Richtung) ist, resultiert zwischen Werkstück 1' und Sprühkopf 3 der Feldlinienverlauf 5 gemäß Figur 2.
Daher werden bei senkrechtem Ansprühen eines elektrisch isotropen Werkstücks 1' die Kanten 1b nicht mitbeschichtet.
Die Schichtdicke der aufgebrachten Beschichtung 6 betrug etwa 10 µm.

### Beispiel 3

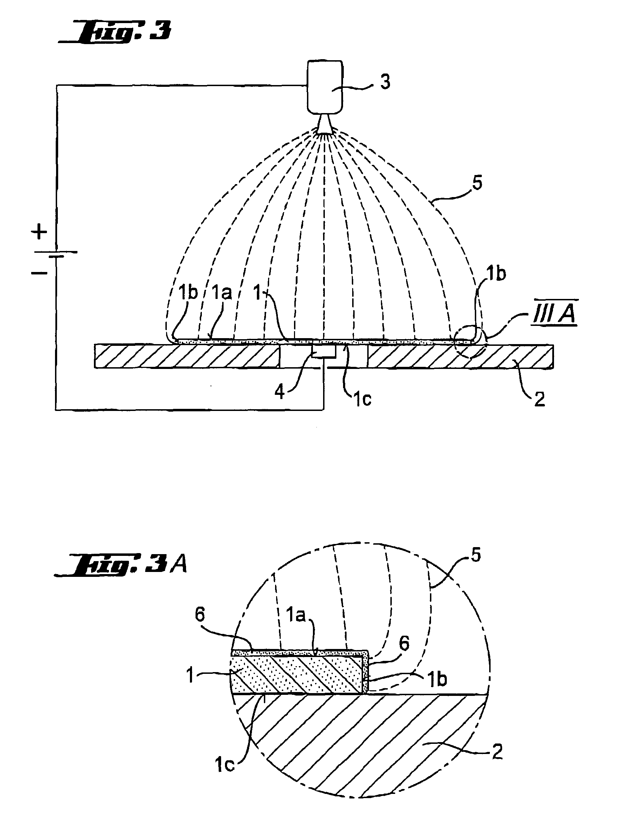

Erfindungsgemäß wird das flächige Gebilde aus Graphitfolie 1 in der Mitte der nicht zu beschichtenden Rückseite 1c punktförmig kontaktiert (Kontakt 4), so dass als Folge der elektrischen Anisotropie der Graphitfolie ein Feldlinienverlauf 5 gemäß Figur 3 entsteht. Bei senkrechtem Ansprühen der Vorderseite 1a erfolgt nun erfindungsgemäß eine Mitbeschichtung der Kantenflächen 1b.
Die Unterlage 2 ist nicht leitfähig.
Die Schichtdicke der aufgebrachten Beschichtung 6 betrug etwa 10 µm.

## Patentansprüche

1. Verfahren zum Aufbringen einer Beschichtung auf eine Flachseite (Vorderseite) und die Kantenflächen eines flächigen Gebildes aus Graphitfolie,
umfassend die Schritte
• Auftragen des Beschichtungsmaterials durch elektrostatisches Pulversprühen
• Sinterzyklus beziehungsweise Aufschmelzzyklus des aufgesprühten Pulvers
**dadurch gekennzeichnet, dass**
während des Sprühens das zu beschichtende flächige Gebilde aus Graphitfolie auf einer begrenzten Fläche mit mindestens 5 mm Abstand von den Rändern nahezu in der Mitte seiner der Sprührichtung abgewandten Rückseite elektrisch kontaktiert wird.

2. Verfahren nach Anspruch 1, **dadurch gekennzeichnet, dass** die Schichtdicke der aufgetragenen Beschichtung höchstens 10 µm beträgt.

3. Verfahren nach Anspruch 1, **dadurch gekennzeichnet, dass** das Beschichtungsmaterial ein Thermoplast ist.

4. Verfahren nach Anspruch 3, **dadurch gekennzeichnet, dass** das Beschichtungsmaterial Polyethylen, Polypropylen und Polyester ist.

5. Verfahren nach Anspruch 1, **dadurch gekennzeichnet, dass** während des Sinter- bzw. Aufschmelzzyklusses eine Aufheizung auf eine Temperatur zwischen 160 und 280 °C erfolgt und diese Temperatur ca. 15 bis 30 Minuten lang gehalten wird.

6. Verwendung der mit dem Verfahren gemäß Anspruch 1 bis 5 beschichteten flächigen Gebilde aus Graphitfolie zur Wärmeableitung in elektronischen Geräten.
